# EUROPÄISCHE PATENTSCHRIFT

(11) **EP 3 347 660 B1**
(45) Veröffentlichungstag und Bekanntmachung des Hinweises auf die Patenterteilung: **17.07.2019**
(21) Anmeldenummer: 16831908.5
(22) Anmeldetag: 30.08.2016
(51) Int. Cl.: F27B 7/00, F27B 7/36, F27D 17/00

(54) **VERFAHREN UND VORRICHTUNG ZUM REDUZIEREN DER NOX-EMISSIONEN EINES DREHROHROFENS**
METHOD AND APPARATUS FOR REDUCING NOX EMISSIONS IN A ROTARY KILN
PROCÉDÉ ET DISPOSITIF POUR RÉDUIRE LES ÉMISSIONS DE NOX D'UN FOUR TUBULAIRE ROTATIF

(30) Priorität: 08.09.2015 AT 5862015
(43) Veröffentlichungstag der Anmeldung: 18.07.2018
(73) Patentinhaber: Holcim Technology Ltd, 8645 Jona (CH)
(72) Erfinder: GAFNER, Irwin, 1180 Rolle (CH)
(74) Vertreter: Keschmann, Marc
(86) Internationale Anmeldenummer: PCT/IB2016/001220
(87) Internationale Veröffentlichungsnummer: WO 2017/042615

(56) Entgegenhaltungen:
- EP-A1- 0 534 225
- GB-A- 1 107 425

## Beschreibung

Die Erfindung betrifft ein Verfahren zum Reduzieren der NOx-Emissionen eines Drehrohrofens einer Klinkerherstellungsanlage, bei dem durch einen Brenner des Drehrohrofens zugeführter Brennstoff mit durch den Brenner zugeführter Primärluft verbrannt wird und die Primärluft einen gegenüber der Umgebungsluft geringeren Sauerstoffgehalt und eine gegenüber der Umgebungsluft erhöhte Temperatur aufweist, wobei die Primärluft durch Vermischen von Umgebungsluft mit Abgas aus dem Drehrohrofen oder aus einem an den Drehrohrofen angeschlossenen, dem Vorwärmen von Rohmehl dienenden Wärmetauscher erhalten wird.

Die Erfindung betrifft weiters eine Vorrichtung zur Durchführung eines solchen Verfahrens.

Ein Verfahren der eingangs genannten Art ist in der DE 3530683 A1 beschrieben.

Die Herstellung von Zementklinker erfolgt überwiegend im Drehrohrofen mit vorgeschaltetem Zyklonvorwärmer und nachgeschaltetem Klinkerkühler.

Das Rohmehl wird im Wärmetauscher erhitzt und vorkalziniert und im Ofen bei Temperaturen zwischen ca. 900°C am Ofeneinlauf und ca. 1.450°C in der Sinterzone zu Klinker umgewandelt. Die Temperatur der für die Bildung der Klinkerminerale erforderlichen Verbrennungsgase beträgt bis zu 2.200°C. Dabei entstehen verfahrensbedingt Stickoxide, welche durch primäre oder sekundäre Maßnahmen gemindert werden können. Primäre Maßnahmen zielen darauf ab, die Entstehung von Stickoxiden zu reduzieren. Sekundäre Maßnahmen zielen darauf ab, die entstandenen Stickoxide durch katalytische und nicht-katalytische Verfahren zu entfernen.

Aus Gründen der Reduzierung der Umweltbelastung schreiben verschiedene gesetzliche Bestimmungen Emissionsgrenzwerte für Stickoxide vor. Gegenwärtig bewegen sich die vorgeschriebenen Emissionsgrenzwerte zwischen 200 und 800mg NOx/Nm³.

Zu den sekundären Maßnahmen zur NOx-Reduktion zählen die selektive katalytische Reduktion (SCR) und die selektive nicht-katalytische Reduktion (SNCR) des Abgases. Die chemische Reaktion ist selektiv, sodass bevorzugt die Stickoxide (NO, NO₂) reduziert werden, während unerwünschte Nebenreaktionen wie die Oxidation von Schwefeldioxid zu Schwefeltrioxid weitgehend unterdrückt werden. Für die Reaktion wird eine Ammoniakkomponente (z.B. Ammoniak (NH₃), Harnstoff (CH₄N₂O) oder andere) benötigt, die dem Abgas zugemischt wird. Die Produkte der Reaktion sind Wasser (H₂O) und Stickstoff (N₂). Die sekundären Maßnahmen sind jedoch mit einer Erhöhung der Betriebskosten verbunden und können dazu führen, dass das Abgas Ammoniak enthält.

Das in der DE 3530683 A1 vorgeschlagene Verfahren zur primären NOx-Reduktion beruht auf der Reduktion des Sauerstoffgehalts des dem Brenner zugeführten Primärgases. Dadurch wird die thermische NOx-Bildung vermindert. Zur Kompensation des geringeren Sauerstoffgehalts wird das Primärgas zudem mit erhöhter Temperatur zugeführt. Als Primärgas wird hierbei Abgas aus dem Drehrohofen oder aus dem Wärmetauscher eingesetzt, das ggf. mit Umgebungsluft vermischt wird.

Eine Schwierigkeit stellt bei diesem Verfahren die Einstellung des optimalen Temperaturniveaus und des Sauerstoffgehalts des Primärgases dar. Die Temperatur und der Sauerstoffgehalt sind für den Verbrennungsprozess und damit für die Qualität des erhaltenen Klinkers von entscheidender Bedeutung, wobei insbesondere auch möglichst gleichbleibende Verhältnisse sichergestellt werden müssen. Bei einer zu hohen Temperatur des Primärgases ist der Effekt der NOx-Reduktion nicht mehr in ausreichendem Maße vorhanden. Eine zu geringe Temperatur führt wiederum zu einer Säurekondensation des im rückgeführten Abgas enthaltenen Schwefels, was zu Korrosionsproblemen führt. Hinsichtlich des Sauerstoffgehalts ist eine Optimierung dahingehend erforderlich, dass ein Kompromiss zwischen einem zu geringen Gehalt, bei dem der Verbrennungsprozess nicht effizient ist, und einem zu hohen Gehalt, bei dem das Ausmaß der NOx-Reduktion zu gering ist, gefunden werden muss.

Zusätzlich müssen auch vorgegebene Werte des Gesamtvolumenstroms des Primärgases eingehalten werden, um den Verbrennungsprozess zu optimieren.

Es ist somit erwünscht, dass im Rahmen der Abgasrückführung zum Zwecke der NOx-Reduktion vorgegebene Temperatur-, Sauerstoffgehalt- und Volumenstromwerte möglichst genau und konstant geregelt und eingehalten werden. Dies ist mit dem Verfahren gemäß der DE 3530683 A1 nicht zufriedenstellend möglich, weil der Sauerstoffgehalt und die Temperatur der Primärluft nicht unabhängig voneinander eingestellt werden können. Eine Erhöhung des Anteils des rückgeführten Abgases im Primärgas beispielsweise führt in Abhängigkeit vom Mischungsverhältnis zwar zu einer Reduzierung des Sauerstoffgehalts in einem gewünschten Ausmaß, gleichzeitig aber auch zu einer Veränderung der Temperatur um einen nicht frei wählbaren Wert. Außerdem führen natürliche Schwankungen in der Temperatur der Umgebungsluft und des Abgases zu einer unkontrollierbaren Änderung der Temperatur des Primärgases.

Die vorliegende Erfindung zielt daher darauf ab, das Verfahren der Abgasrückführung dahingehend zu verbessern, dass die Temperatur und der Sauerstoffgehalt des Primärgases und ggf. der Volumenstrom möglichst unabhängig voneinander eingestellt werden können, um eine ausreichende NOx-Reduktion bei gleichzeitiger Optimierung der Verbrennungsverhältnisse zu erreichen.

Zur Lösung dieser Aufgabe sieht die Erfindung bei einem Verfahren der eingangs genannten Art im Wesentlichen vor, dass die Primärluft weiters durch Vermischen mit Warmluft, insbesondere Abluft eines Klinkerkühlers, erhalten wird. Dadurch, dass nun zusätzlich zur Umgebungsluft und zum Abgas bei Bedarf ein dritter Luftstrom, nämlich Warmluft, beigemischt wird, können durch Wahl eines geeigneten Mischungsverhältnisses Temperatur und Sauerstoffgehalt des Primärgases weitestgehend unabhängig voneinander eingestellt werden. Dadurch, dass nun ein dritter Steuerparameter zur Verfügung steht, wird die Einstellung der gewünschten Primärgaseigenschaften auch bei schwankenden Umgebungsbedingungen innerhalb weiterer Bereiche als beim Stand der Technik erleichtert.

Als Warmluft wird hierbei Luft verstanden, die eine gegenüber Umgebungsluft höhere Temperatur aufweist, wobei die Verwendung von Abluft eines Klinkerkühlers bevorzugt ist. Die Warmluft hat bevorzugt eine Temperatur, die zwischen oder über der Temperatur des Abgases und derjenigen der Umgebungsluft liegt.

Eine bevorzugte Verfahrensführung sieht vor, dass das Mischungsverhältnis von Umgebungsluft, Abgas und Warmluft so geregelt wird, dass das Primärgas dem Brenner mit einer Temperatur von 50-250°C, insbesondere 100-150°C und einem Sauerstoffgehalt von 8-18 Vol.-%, insbesondere 13-16 Vol.-% zugeführt wird. Die Volumenströme von Umgebungsluft, Abgas und Warmluft werden somit so gewählt und aufeinander abgestimmt, dass die gewünschten Primärgaseigenschaften erhalten werden. Zu diesem Zweck werden die Temperatur und der Sauerstoffwert des Primärgases möglichst direkt vor dem Eintritt in den Brenner von Sensoren kontinuierlich oder in regelmäßigen Zeitabständen gemessen und einer Regelung zugeführt, in der geeignete Werte für die Volumenströme errechnet und Stellbefehle für entsprechende Stellorgane in den Zufuhrleitungen generiert werden. Die Regelung berücksichtigt hierbei die Temperatur und den Sauerstoffgehalt der zur Verfügung stehenden Umgebungsluft, des Abgases und der Warmluft. Andererseits werden Charakteristika der Regelstrecke zwischen dem Punkt der Vermischung der einzelnen Volumenströme und dem Punkt der Messwertaufnahme am Eintritt des Primärgases vor dem Brenner berücksichtigt, wie z.B. eine Druck- und damit Temperaturerhöhung durch ein hier angeordnetes Hauptgebläse.

Es wurde gefunden, dass die Einhaltung der oben angeführten Werte für Temperatur und Sauerstoffgehalt des Primärgases einen idealen Kompromiss zwischen den zueinander gegenläufigen Erfordernissen einer ausreichenden Reduktion der NOx-Werte einerseits und der Sicherstellung eines effizienten Verbrennungsprozesses im Drehrohrofen, der Wirtschaftlichkeit des Ofenbetriebs und der Einhaltung einer guten Klinkerqualität andererseits, darstellt.

Als weitere Regelgröße kann vorteilhafterweise der Gesamtvolumenstrom des Primärgases herangezogen werden. Das Verfahren wird in diesem Zusammenhang bevorzugt so durchgeführt, dass die Vermischung von Umgebungsluft, Abgas und Warmluft zum Erhalten eines dem Prozess angepassten Volumenstroms des Primärgases geregelt wird.

Hinsichtlich der Temperatur der einzelnen Teilströme des Primärgases sind folgende Werte bevorzugt. Die Warmluft kann mit einer Temperatur von 80-150°C eingesetzt werden, wobei ein solches Temperaturniveau in einfacher Weise durch Verwendung der Abluft aus dem Klinkerkühler erhalten werden kann. Das rückzuführende Abgas wird bevorzugt mit einer Temperatur von 100-200°C eingesetzt.

Bevorzugt ist weiters vorgesehen, dass Abgas mit einem Sauerstoffgehalt von 6-10 Vol.-% eingesetzt wird.

Als Primärluft wird im Rahmen der Erfindung die Summe aller Förderströme angesehen, die dem Brennraum durch den Brenner des Drehrohrofens zugeleitet wird. Bei dem Brenner handelt es sich hierbei insbesondere um den Brenner für die Hauptfeuerung des Drehrohrofens. Solche Brenner weisen in der Regel eine Mehrzahl von Kanälen für Primärgas auf, insbesondere wenigstens einen Kanal für die Zuführung der Drallkomponente des Primärgases und wenigstens einen solchen für die Zuführung der Axialkomponente des Primärgases. Zur Primärluft wird weiters die Förderluftmenge für den Brennstoffeintrag gezählt. Als Sekundärluft wird die dem Brennraum außerhalb des Brenners, z.B. seitlich des Brenners zugeführte Luft, bezeichnet.

Der Großteil der Verbrennungsluftmenge wird hierbei über die Sekundärluft zugeführt. Bevorzugt ist im Rahmen der Erfindung vorgesehen, dass dem Drehrohrofen 5-20 Vol.-% der Verbrennungsluft als Primärgas und 80-95 Vol.-% als Sekundärluft zugeführt wird.

Gemäß einem weiteren Aspekt betrifft die Erfindung eine Vorrichtung zur Durchführung des oben beschriebenen Verfahrens, umfassend einen Drehrohrofen mit einem Brenner, einen abgasseitig an den Drehrohrofen angeschlossenen Wärmetauscher mit oder ohne Kalzinator, und einen Klinkerkühler, wobei eine Primärgaszufuhr für den Brenner mit einem Hauptgebläse vorgesehen ist, wobei stromaufwärts des Hauptgebläses eine Mischeinrichtung mit einer Umgebungsluftzufuhr, einer vom Abgas des Wärmetauschers gespeisten Abgaszufuhr und einer von der Abluft des Klinkerkühlers gespeisten Warmluftzufuhr angeordnet ist.

Bevorzugt ist vorgesehen, dass die Umgebungsluftzufuhr, die Abgaszufuhr und die Warmluftzufuhr jeweils mit einem Regelorgan zur Reglung des Volumenstroms ausgestattet sind, wobei die Regelorgane mit einer Steuereinrichtung verbunden sind, der Messwerte eines stromabwärts des Hauptgebläses angeordneten Temperatursensors und Sauerstoffgehaltsensors zugeführt sind, wobei die Steuereinrichtung zur Einstellung der Regelorgane eingerichtet ist, sodass eine vorgegebene Temperatur von bevorzugt 50-250°C, insbesondere 100-150°C, und ein vorgegebener Sauerstoffgehalt von vorzugsweise 8-18 Vol.-%, insbesondere 13-16 Vol.-%, des dem Brenner zugeführten Primärgases eingehalten wird.

Weiters ist bevorzugt vorgesehen, dass die Steuereinrichtung zur Einstellung der Regelorgane so eingerichtet ist, dass ein vorgegebener Volumenstrom des dem Brenner zugeführten Primärgases eingehalten wird.

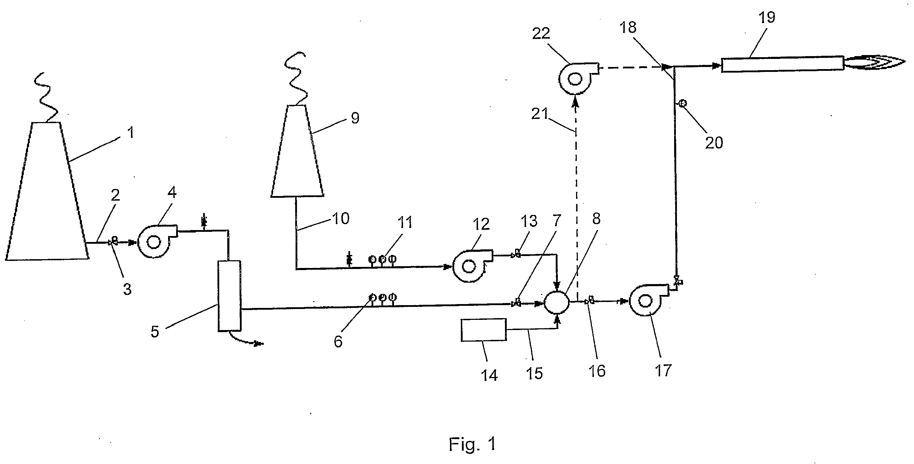

Die Erfindung wird nachfolgend anhand eines in der Zeichnung schematisch dargestellten Ausführungsbeispiels näher erläutert. In Fig. 1 ist ein Schornstein 1 zum Ableiten von Abgas aus einem Wärmetauscher eines Vorwärmers für Rohmehl dargestellt. Aus dem Schornstein 1 wird über eine Leitung 2 Abgas abgezweigt, wobei der abgezweigte Volumenstrom über ein Regelorgan 3 einstellbar ist. Das Gebläse zum Abziehen des Abgases ist mit 4 bezeichnet. Das Abgas wird vorzugsweise durch einen Kondensator 5 geleitet, in welchem dem Abgas Wasser entzogen wird, welches anschließend recycliert werden kann. Der Sauerstoffgehalt, die Temperatur und ggf. der Druck des Abgases werden mittels Sensoren 6 gemessen, wobei ein weiteres Regelorgan zur Einstellung des Volumenstroms mit 7 bezeichnet ist. Das Abgas wird anschließend einer Mischkammer 8 zugeführt. Der Mischkammer 8 wird weiters Abluft aus dem Schornstein 9 zugeführt, wobei es sich um Abluft aus dem Klinkerkühler handelt. Die Abluft wird über eine Leitung 10 und ein Gebläse 12 geführt. Sensoren zur Messung der Temperatur, und ggf. des Drucks der Abluft werden mittels der Sensoren 11 ermittelt. Der Volumenstrom der Abluft kann mit einem Regelorgan 13 eingestellt werden.

Weiters wird der Mischkammer 8 Umgebungsluft 14 über eine Leitung 15 zugeführt.

Die Mischung aus Umgebungsluft, Abgas und Abluft wird über ein Gebläse 17 und eine Leitung 18 dem Brenner 19 des Drehrohrofens als Primärgas zugeführt. Ein Teil des Primärgases kann über die Leitung 21 und das Gebläse 22 auch als Transportgas entsprechenden Dosierorganen für Brennstoffe zugeführt werden. Zur Einstellung des Volumenstroms des Primärgases ist ein Regelorgan 16 vorgesehen. Am Messpunkt 20 werden die Temperatur, der Sauerstoffgehalt, der Druck und der Volumenstrom des Primärgases gemessen und in einer nicht dargestellten Steuervorrichtung mit Sollwerten verglichen. Bei einer Abweichung von den Sollwerten wirkt die Steuervorrichtung mit den Regelorganen 3, 7, 13 und einem nicht dargestellten Regelorgan für die Einstellung der Umgebungsluftmenge zusammen, um eine Korrektur zu bewirken.

## Patentansprüche

1. Verfahren zum Reduzieren der NOx-Emissionen eines Drehrohrofens einer Klinkerherstellungsanlage, bei dem durch einen Brenner des Drehrohrofens zugeführter Brennstoff mit durch den Brenner zugeführter Primärluft verbrannt wird und die Primärluft einen gegenüber der Umgebungsluft geringeren Sauerstoffgehalt und eine gegenüber der Umgebungsluft erhöhte Temperatur aufweist, wobei die Primärluft durch Vermischen von Umgebungsluft mit Abgas aus dem Drehrohrofen oder aus einem an den Drehrohrofen angeschlossenen, dem Vorwärmen von Rohmehl dienenden Wärmetauscher erhalten wird, **dadurch gekennzeichnet, dass** die Primärluft weiters durch Vermischen mit Warmluft, insbesondere Abluft eines Klinkerkühlers, erhalten wird.

2. Verfahren nach Anspruch 1, **dadurch gekennzeichnet, dass** das Mischungsverhältnis von Umgebungsluft, Abgas und Warmluft so geregelt wird, dass das Primärgas dem Brenner mit einer Temperatur von 50-250°C, insbesondere 100-150°C und einem Sauerstoffgehalt von 8-18 Vol.-%, insbesondere 13-16 Vol.-% zugeführt wird.

3. Verfahren nach Anspruch 1 oder 2, **dadurch gekennzeichnet, dass** die Vermischung von Umgebungsluft, Abgas und Warmluft zum Erhalten eines dem Prozess angepassten Volumenstroms des Primärgases geregelt wird.

4. Verfahren nach Anspruch 1, 2 oder 3, **dadurch gekennzeichnet, dass** Warmluft mit einer Temperatur von 80-150°C, vorzugsweise 90-100°C eingesetzt wird.

5. Verfahren nach einem der Ansprüche 1 bis 4, **dadurch gekennzeichnet, dass** Abgas mit einer Temperatur von 100-200°C, vorzugsweise 145-185°C eingesetzt wird.

6. Verfahren nach einem der Ansprüche 1 bis 5, **dadurch gekennzeichnet, dass** Abgas mit einem Sauerstoffgehalt von 6-10 Vol.-%, vorzugsweise 6-8 Vol.-% eingesetzt wird.

7. Verfahren nach einem der Ansprüche 1 bis 6, **dadurch gekennzeichnet, dass** dem Drehrohrofen 5-20 Vol.-% Primärgas und 80-95 Vol.-% Sekundärgas zugeführt wird.

8. Verfahren nach einem der Ansprüche 1 bis 7, **dadurch gekennzeichnet, dass** ein Teil des Primärgases als Transportgas für Brennstoffe verwendet wird.

9. Vorrichtung zur Durchführung des Verfahrens nach einem der Ansprüche 1 bis 8, umfassend einen Drehrohrofen mit einem Brenner, einen abgasseitig an den Drehrohrofen angeschlossenen Wärmetauscher und einen Klinkerkühler, wobei eine Primärgaszufuhr (18) für den Brenner (19) mit einem Hauptgebläse (17) vorgesehen ist, wobei stromaufwärts des Hauptgebläses eine Mischeinrichtung (8) mit einer Umgebungsluftzufuhr, einer vom Abgas des Wärmetauschers gespeisten Abgaszufuhr (2) und einer von der Abluft des Klinkerkühlers gespeisten Warmluftzufuhr (10) angeordnet ist.

10. Vorrichtung nach Anspruch 9, **dadurch gekennzeichnet, dass** die Umgebungsluftzufuhr, die Abgaszufuhr und die Warmluftzufuhr jeweils mit einem Regelorgan zur Reglung des Volumenstroms ausgestattet sind, wobei die Regelorgane mit einer Steuereinrichtung verbunden sind, der Messwerte eines stromabwärts des Hauptgebläses angeordneten Temperatursensors und Sauerstoffgehaltsensors zugeführt sind, wobei die Steuereinrichtung zur Einstellung der Regelorgane eingerichtet ist, sodass eine vorgegebene Temperatur von bevorzugt 50-250°C, insbesondere 100-150°C, und ein vorgegebener Sauerstoffgehalt von vorzugsweise 8-18 Vol.-%, insbesondere 13-16 Vol.-%, des dem Brenner zugeführten Primärgases eingehalten wird.

11. Vorrichtung nach Anspruch 9 oder 10, **dadurch gekennzeichnet, dass** die Steuereinrichtung zur Einstellung der Regelorgane eingerichtet ist, sodass ein vorgegebener Volumenstrom des dem Brenner zugeführten Primärgases eingehalten wird.

## Claims

1. A method for reducing the NOx emissions of a rotary kiln of a clinker production plant, in which fuel supplied through a burner of the rotary kiln is burned along with primary air fed through the burner and the primary air has an oxygen content reduced relative to that of the ambient air and a temperature increased relative to that of the ambient air, the primary air being obtained by mixing ambient air with exhaust gas from the rotary kiln or from a heat exchanger connected to the rotary kiln and used for preheating raw meal, **characterized in that** the primary air is further obtained by mixing with hot air, in particular waste air from a clinker cooler.

2. A method according to claim 1, **characterized in that** the mixing ratio of ambient air, exhaust gas and hot air is controlled such that the primary gas is fed to the burner at a temperature of 50-250°C, in particular 100-150°C, and an oxygen content of 8-18% by vol., in particular 13-16% by vol.

3. A method according to claim 1 or 2, **characterized in that** the mixing of ambient air, exhaust gas and hot air is controlled to maintain a volume flow of primary gas adapted to the process.

4. A method according to claim 1, 2 or 3, **characterized in that** hot air is used at a temperature of 80-150°C, preferably 90-100°C.

5. A method according to any one of claims 1 to 4, **characterized in that** exhaust gas is used at a temperature of 100-200°C, preferably 145-185°C.

6. A method according to any one of claims 1 to 5, **characterized in that** exhaust gas with an oxygen content of 6-10% by vol., preferably 6-8% by vol., is used.

7. A method according to any one of claims 1 to 6, **characterized in that** 5-20% by vol. of primary gas, and 80-95% by vol. of secondary gas, are fed to the rotary kiln.

8. A method according to any one of claims 1 to 7, **characterized in that** a portion of the primary gas is used as transport gas for fuels.

9. A device for carrying out the method according to any one of claims 1 to 8, comprising a rotary kiln with a burner, a heat exchanger connected to the rotary kiln on the exhaust-gas side, and a clinker cooler, wherein a primary gas supply (18) for the burner (19) with a main fan (17) is provided, wherein a mixing device (8) including an ambient air supply, an exhaust gas supply (2) fed with the exhaust gas from the heat exchanger, and a hot air supply (10) fed with the waste air from the clinker cooler are disposed upstream of the main fan.

10. A device according to claim 9, **characterized in that** the ambient air supply, the exhaust gas supply and the hot air supply are each equipped with a control element for controlling the respective volume flow, wherein the control elements are connected to a control device to which measurements of a temperature sensor and oxygen-content sensor disposed downstream of the main fan are fed, wherein the control device is arranged to adjust the control elements such that a specified temperature of preferably 50-250°C, in particular 100-150°C, and a specified oxygen content of preferably 8-18% by vol., in particular 13-16% by vol., of the primary gas supplied to the burner are maintained.

11. A device according to claim 9 or 10, **characterized in that** the control device is arranged to adjust the control elements such that a specified volume flow of the primary gas supplied to the burner is maintained.

## Revendications

1. Procédé pour réduire les émissions de NOx d'un four tubulaire rotatif d'une installation de production de clinker, dans lequel du carburant amené par un brûleur du four tubulaire rotatif est brûlé avec l'air primaire amené par le brûleur et l'air primaire présente une teneur en oxygène inférieure par rapport à celle de l'air ambiant et une température accrue par rapport à celle l'air ambiant, dans lequel l'air primaire est obtenu par mélange d'air ambiant avec des gaz d'échappement du four tubulaire rotatif ou d'un échangeur de chaleur raccordé au four tubulaire rotatif, servant au préchauffage de farine crue, **caractérisé en ce que** l'air primaire est obtenu en outre par mélange d'air chaud, en particulier d'air d'évacuation d'un refroidisseur de clinker.

2. Procédé selon la revendication 1, **caractérisé en ce que** le rapport de mélange de l'air ambiant, des gaz d'échappement et de l'air chaud est régulé de sorte que le gaz primaire est amené au bruleur avec une température de 50-250 °C, en particulier de 100-150 °C et une teneur en oxygène de 8-18 % vol., en particulier de 13-16 % vol..

3. Procédé selon la revendication 1 ou 2, **caractérisé en ce que** le mélange d'air ambiant, de gaz d'échappement et d'air chaud pour obtenir un débit volumique du gaz primaire adapté au processus est régulé.

4. Procédé selon la revendication 1, 2 ou 3, **caractérisé en ce que** de l'air chaud avec une température de 80-150 °C, de préférence de 90-100 °C est utilisé.

5. Procédé selon l'une quelconque des revendications 1 à 4, **caractérisé en ce que** des gaz d'échappement avec une température de 100-200 °C, de préférence de 145-185 °C sont utilisés.

6. Procédé selon l'une quelconque des revendications 1 à 5, **caractérisé en ce que** des gaz d'échappement avec une teneur en oxygène de 6-10 % vol., de préférence de 6-8 % vol. sont utilisés.

7. Procédé selon l'une quelconque des revendications 1 à 6, **caractérisé en ce que** 5-20 % vol. de gaz primaire et 80-95 % vol. de gaz secondaire sont amenés au four tubulaire rotatif.

8. Procédé selon l'une quelconque des revendications 1 à 7, **caractérisé en ce qu'**une partie du gaz primaire est utilisée en tant que gaz de transport pour carburants.

9. Dispositif pour la réalisation du procédé selon l'une quelconque des revendications 1 à 8, comprenant un four tubulaire rotatif avec un brûleur, un échangeur de chaleur raccordé côté gaz d'échappement au four tubulaire rotatif, et un refroidisseur de clinker, dans lequel une amenée de gaz primaire (18) est prévue pour le brûleur (19) avec un ventilateur principal (17), dans lequel un dispositif de mélange (8) avec une amenée d'air ambiant, une amenée de gaz d'échappement (2) alimentée par les gaz d'échappement de l'échangeur de chaleur et une amenée d'air chaud (10) alimentée par l'air évacué du refroidisseur de clinker est agencé en amont du ventilateur principal.

10. Dispositif selon la revendication 9, **caractérisé en ce que** l'amenée d'air ambiant, l'amenée de gaz d'échappement et l'amenée d'air chaud sont équipées respectivement d'un organe de régulation pour la régulation du débit volumique, dans lequel les organes de régulation sont reliés à un dispositif de commande, auquel des valeurs de mesure d'un capteur de température et capteur de teneur en oxygène agencé en aval du ventilateur principal sont amenées, dans lequel le dispositif de commande est aménagé pour le réglage des organes de régulation, de sorte qu'une température prédéfinie de préférence de 50-250 °C, en particulier de 100-150 °C, et une teneur en oxygène prédéfinie de préférence de 8-18 % vol., en particulier de 13-16 % vol., du gaz primaire amené au brûleur sont respectées.

11. Dispositif selon la revendication 9 ou 10, **caractérisé en ce que** le dispositif de commande est aménagé pour le réglage des organes de régulation, de sorte qu'un débit volumique prédéfini du gaz primaire amené au brûleur est respecté.
